# EUROPEAN PATENT SPECIFICATION

(11) **EP 4 475 258 B1**
(45) Date of publication and mention of the grant of the patent: **02.12.2026**
(21) Application number: 23877686.8
(22) Date of filing: 12.10.2023
(51) Int. Cl.: H01M 10/0567, H01M 10/052, H01M 10/0525, H01M 10/0569, H01M 4/505, H01M 4/525, H01M 10/0568

(54) **NON-AQUEOUS ELECTROLYTE AND LITHIUM SECONDARY BATTERY INCLUDING THE SAME**
WASSERFREIER ELEKTROLYT UND LITHIUMSEKUNDÄRBATTERIE DAMIT
ÉLECTROLYTE NON AQUEUX ET BATTERIE SECONDAIRE AU LITHIUM LE COMPRENANT

(30) Priority: 14.10.2022 KR 20220132748
(43) Date of publication of application: 11.12.2024
(73) Proprietor: LG Energy Solution, Ltd., Seoul 07335 (KR)
(72) Inventor: JI, Su Hyeon, Daejeon 34122 (KR); LEE, Chul Haeng, Daejeon 34122 (KR); LEE, Kyung Mi, Daejeon 34122 (KR); LEE, Jung Min, Daejeon 34122 (KR); YEOM, Chul Eun, Daejeon 34122 (KR); HAN, Jung Gu, Daejeon 34122 (KR); CHO, Yoon Gyo, Daejeon 34122 (KR)
(74) Representative: Hoffmann Eitle
(86) International application number: PCT/KR2023/015675
(87) International publication number: WO 2024/080763

(56) References cited:
- WO-A1-2021/158366
- WO-A1-2021/158366
- CN-A- 105 830 270
- CN-A- 105 830 270
- JP-A- 2019 109 997
- JP-A- 2019 109 997
- JP-B2- 6 201 485
- JP-B2- 6 201 485
- KR-A- 20220 065 686
- KR-A- 20220 065 686

## Description

### TECHNICAL FIELD

The present invention relates to a non-aqueous electrolyte and a lithium secondary battery including the same.

### BACKGROUND ART

Recently, demand for a secondary battery having high stability as well as high capacity and high output is increasing as an application area of lithium secondary batteries is rapidly expanding not only to electricity, electronics, communication, and power supply of electronic devices such as computers, but also to power storage supply of automobiles or large-area devices such as power storage devices.

Particularly, high capacity, high output, and longterm life characteristics are becoming important in lithium secondary batteries for automotive applications. In order to increase capacity of the secondary battery, a nickel-rich positive electrode active material having high energy density but low stability may be used, or the secondary battery may be operated at a high voltage.

However, in a case in which the secondary battery is operated under the above conditions, transition metal ions may be dissolved from a surface of a positive electrode while an electrode surface structure or a film formed on the surface of the positive/negative electrode is degraded due to a side reaction caused by degradation of an electrolyte as charge and discharge proceed. As described above, since the dissolved transition metal ions degrade passivation ability of a solid electrolyte interphase (SEI) while being electro-deposited on the negative electrode, there occurs a problem in that the negative electrode is degraded.

This degradation phenomenon of the secondary battery tends to be accelerated when a potential of the positive electrode is increased or when the battery is exposed to a high temperature, and there occurs a problem in that cycle characteristics of the secondary battery are degraded by the degradation phenomenon.

Also, a so-called swelling phenomenon, in which gas is generated to increase a thickness of the battery if a lithium ion battery is continuously used for a long time or is left standing at a high temperature, occurs, wherein it is known that an amount of the gas generated in this case depends on a state of the SEI.

Thus, in order to solve this problem, research and development on a method capable of reducing the swelling phenomenon of the secondary battery and increasing stability at high temperatures by inhibiting the dissolution of the metal ions from the positive electrode and forming a stable SEI film on the negative electrode are being attempted.
WO 2021/158366 describes electrolytes and electrolyte additives for energy storage devices comprising cyanate based compounds.
KR 10-20220065686 describes a lithium secondary battery including: a non-aqueous electrolyte including lithium salt, an organic solvent, a first additive represented by chemical formula 1 and a second additive represented by chemical formula 2; a positive electrode including a lithium iron phosphate-based composite oxide; a negative electrode including a negative electrode active material; and a separator interposed between the positive electrode and the negative electrode, wherein the contents of the first additive and the second additive are 0.1 to 5 wt% based on the total weight of the non-aqueous electrolyte, respectively.

### DISCLOSURE OF THE INVENTION

### TECHNICAL PROBLEM

An aspect of the present invention provides a non-aqueous electrolyte in which stability at high temperature is improved by including the non-aqueous electrolyte which may suppress degradation of a positive electrode, may reduce a side reaction between the positive electrode and the electrolyte, and may form a stable solid electrolyte interphase (SEI) film on a negative electrode.

That is, the present invention provides a lithium secondary battery in which overall performance is improved through improvement of high-temperature cycle characteristics, high-temperature storage characteristics, and thermal stability by including the above non-aqueous electrolyte.

### TECHNICAL SOLUTION

In order to achieve the above object, the present invention provides a non-aqueous electrolyte including a lithium salt, an organic solvent, a compound of Formula 1 as a first additive, and a compound of Formula 2 or Formula 3 as a second additive. 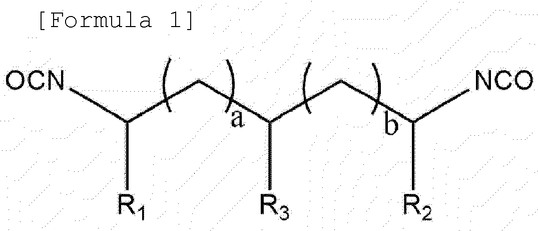 wherein, in Formula 1, R₁ to R₃ are each independently hydrogen (H) or -N=C=O, wherein at least one of R₁ to R₃ is - N=C=O, and a and b are each an integer of 0 to 4. 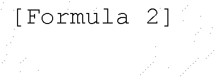 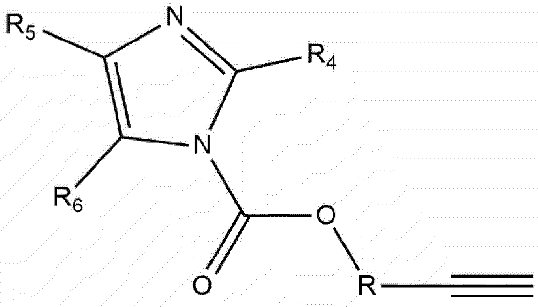 wherein, in Formula 2, R is an unsubstituted or substituted alkylene group having 1 to 3 carbon atoms, and R₄ to R₆ are each independently H or an alkyl group or nitrile group having 1 to 3 carbon atoms. 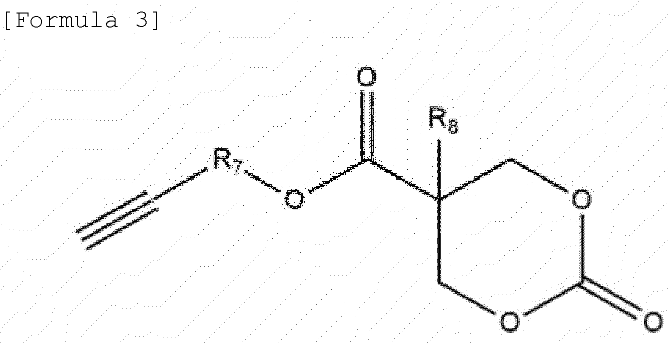 wherein, in Formula 3, R₇ is an alkylene group having 1 to 8 carbon atoms, and R₈ is selected from the group consisting of H, an alkyl group having 1 to 10 carbon atoms, and a cycloalkyl group having 3 to 8 carbon atoms.

Also, the present invention provides a lithium secondary battery including the non-aqueous electrolyte.

### ADVANTAGEOUS EFFECTS

A compound of Formula 1, which is provided as a first additive for a non-aqueous electrolyte of the present invention, is a compound substituted with three or more isocyanate functional groups, wherein, since it has many sites where film formation is possible, it may form a robust solid electrolyte interphase (SEI) film. Thus, degradation of a negative electrode may be prevented by suppressing a decrease in passivation ability of the SEI at high temperatures.

A compound of Formula 2 or Formula 3, which is provided as a second additive for the non-aqueous electrolyte of the present invention, helps to improve high-temperature durability by containing a propargyl group in a molecule. An SEI film, which is formed through a negative electrode reduction reaction of the compound of Formula 2 or Formula 3, contains a propargyl group, and the propargyl group becomes a cross-link site in the SEI to allow an additional reaction. Since a robust SEI film is formed if the additional crosslinking reaction proceeds, it is effective in suppressing performance degradation due to negative electrode electrodeposition of transition metals dissolved from a positive electrode. Also, a cyclic carbonate functional group and an imidazole functional group, which are included in the additive of Formula 2 or Formula 3, may improve performance and may reduce transition metal dissolution, which may occur during high-voltage charge, by effectively suppressing positive electrode degradation and a side reaction on a surface of the positive electrode through stable CEI formation. That is, the compound of Formula 2 or Formula 3, which is provided as the second additive for the non-aqueous electrolyte of the present invention, may form a stable ion conductive film on the surface of the positive/negative electrode.

Furthermore, the first additive is effective in scavenging moisture and HF in the electrolyte by containing an isocyanate functional group, and forms a polyurea- and polyurethane-based film on the surface of the positive/negative electrode. Such a polymeric film may be formed more stably and robustly particularly when used with the propargyl-based additive such as Formulae 2 and 3. The reason for this is that a propargyl group-based film is formed between the polymeric films to help to strongly link to the surface of the positive/negative electrode. Also, the reason for this is that the propargyl group-based additives act as a linker between the polymeric films resulting from the first additive while being present in a polymer structure. Accordingly, since a lithium secondary battery including the non-aqueous electrolyte of the present invention has a stable film, it may suppress an additional side reaction and may reduce performance degradation even under volume expansion of the negative electrode which occurs during charge and discharge. Thus, since the non-aqueous electrolyte of the present invention may form a stable and highly durable electrode-electrolyte interface even at high temperatures and may suppress an unnecessary electrolyte decomposition side reaction, a lithium secondary battery with improved overall performance may be achieved.

### MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the present specification each denote the number of carbon atoms included in a specific functional group. That is, the functional group may include "a" to "b" carbon atoms. For example, the expression "alkylene group having 1 to 5 carbon atoms" denotes an alkylene group including 1 to 5 carbon atoms, that is, -CH₂-, -CH₂CH₂-, - CH₂CH₂CH₂-, -CH₂(CH₃)CH-, -CH(CH₃)CH₂-, and -CH(CH₃)CH₂CH₂-.

Furthermore, in the present specification, the expression "alkylene group" denotes a branched or unbranched divalent hydrocarbon group.

Also, an alkyl group in the present specification may all be substituted or unsubstituted. Unless otherwise defined, the expression "substitution" denotes that at least one hydrogen bonded to carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

Hereinafter, the present invention will be described in more detail.

### Non-aqueous Electrolyte

A non-aqueous electrolyte according to the present invention may include a lithium salt; an organic solvent; a compound of Formula 1 below as a first additive; and a compound of Formula 2 or Formula 3 below as a second additive.

The non-aqueous electrolyte according to the present invention includes a compound represented by Formula 1 below as a first additive. The compound of Formula 1 below is a compound substituted with three or more isocyanate functional groups, wherein, since it has many sites where film formation is possible, it may form a robust solid electrolyte interphase (SEI) film. Also, the isocyanate group may suppress an increase in acidity and improve durability by scavenging moisture in the electrolyte. The first additive forms a polymeric film, such as polyurea or polyurethane, on a surface of a positive/negative electrode.

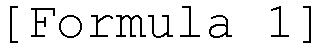

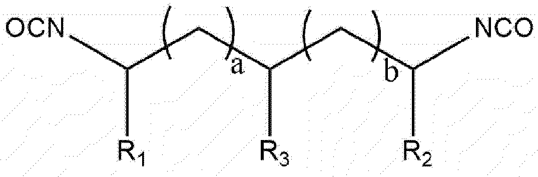

In Formula 1, R₁ to R₃ are each independently hydrogen (H) or -N=C=O, wherein at least one of R₁ to R₃ is -N=C=O.

In Formula 1, a and b may each be an integer of 0 to 4, and may preferably be an integer of 1 or 2.

Specifically, the compound of Formula 1 may be any one of compounds represented by Formulae 1-1 to 1-4 below.

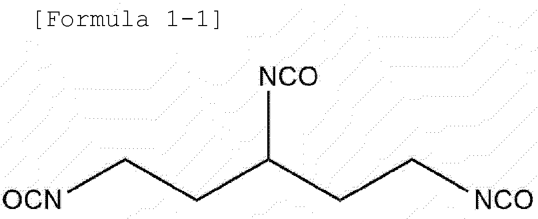

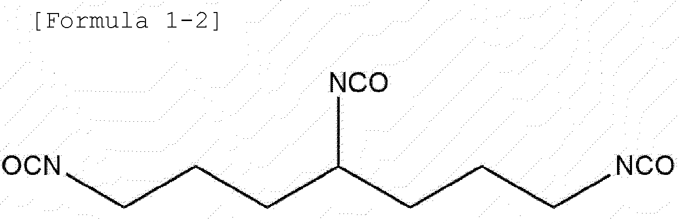

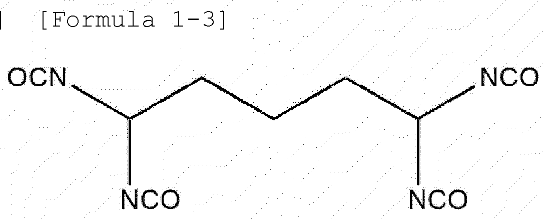

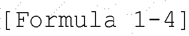

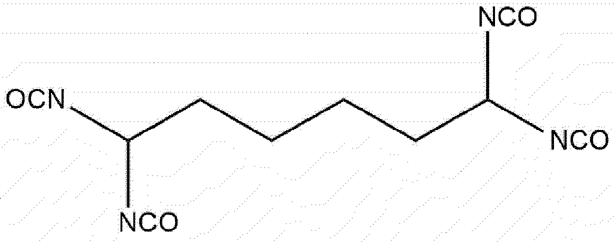

The non-aqueous electrolyte according to the present invention includes a compound represented by Formula 2 or Formula 3 below as a second additive. Since the compound of Formula 2 or Formula 3 contains a propargyl group, it is easily reduced on the surface of the negative electrode, and may easily form a film on the surface of the negative electrode. Since this film has higher stability than an SEI film that is formed by reductive decomposition of a typical electrolyte and has low electronic conductivity, it has an advantage of suppressing an additional decomposition reaction of the electrolyte and not being easily damaged by a change in volume of the negative electrode. That is, stability of an interface between the negative electrode and the electrolyte may be secured by using the compound of Formula 2 or Formula 3 as an additive of the electrolyte.

Since the compound of Formula 2 contains an oxygen atom and a propargyl group having a triple bond which is known to have metal ion adsorbability, the propargyl group, which is released by cleavage of a bond between a nitrogen (N) atom and a carbon (C) atom of an imidazole group, may adsorb metallic foreign matter, such as iron (Fe), cobalt (Co), manganese (Mn), and nickel (Ni), dissolved from the positive electrode during high-voltage charge to effectively suppress a negative electrode degradation phenomenon that occurs due to electrodeposition of the metallic foreign matter on the surface of the negative electrode. Also, since the compound represented by Formula 2 is reduced on the surface of the negative electrode by a reaction of a lone pair of the nitrogen (N) atom of the imidazole group with alkyl carbonate as a decomposition product of ethylene carbonate (EC) used as the organic solvent, it may form a stable ion conductive film on the surface of the negative electrode. Thus, since it may not only suppress the additional electrolyte decomposition reaction during charge and discharge, but may also facilitate intercalation and deintercalation of lithium ions from the negative electrode even during overcharge or high-temperature storage, it may improve cycle life characteristics and high-temperature storage performance of a secondary battery.

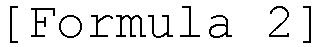

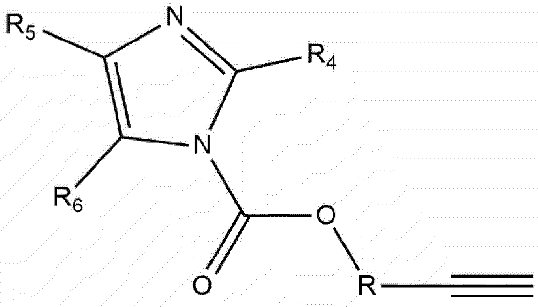

In Formula 2, R is an unsubstituted or substituted alkylene group having 1 to 3 carbon atoms, and R₄ to R₆ are each independently H or an alkyl group or nitrile group having 1 to 3 carbon atoms. Examples of a substituent of R may be fluorine (F) or CF₃.

Specifically, the compound of Formula 2 of the present invention may be a compound of Formula 2-1 below.

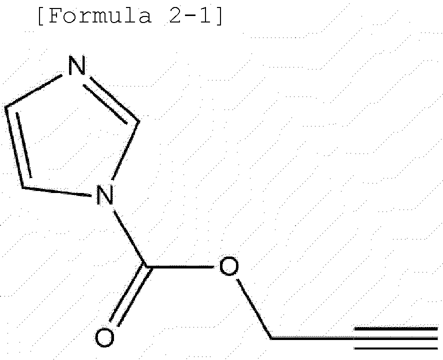

The compound of Formula 3 contains an ester functional group and an unsaturated hydrocarbon group in its molecular structure, and is decomposed before other components of the electrolyte during an initial charge process of the secondary battery to form a film containing a compound based on a carbon-oxygen single bond (C-O) or carbon-oxygen double bond (C=O) as a main component on the surface of the negative electrode. Furthermore, since the compound of Formula 3 contains a propargyl group, it is easily reduced on the surface of the negative electrode and may easily form a film on the surface of the negative electrode. Since this film has higher stability than the SEI film that is formed by the reductive decomposition of the typical electrolyte and has low electronic conductivity, it has an advantage of suppressing the additional decomposition reaction of the electrolyte and not being easily damaged by the change in volume of the negative electrode.

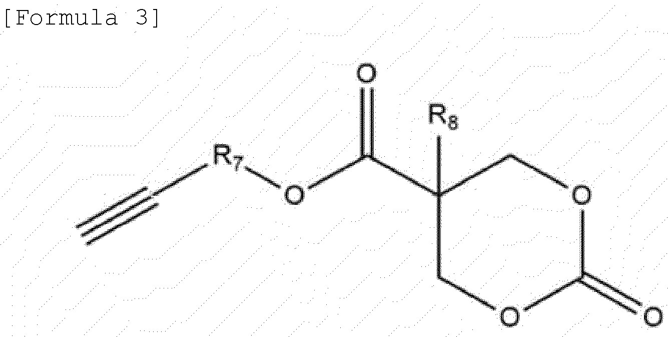

In Formula 3, R₇ is an alkylene group having 1 to 8 carbon atoms, and may preferably be an alkylene group having 1 to 5 carbon atoms.

In Formula 3, R₈ may be selected from the group consisting of H, an alkyl group having 1 to 10 carbon atoms, and a cycloalkyl group having 3 to 8 carbon atoms.

The compound of Formula 3 may be a compound of Formula 3-1 below.

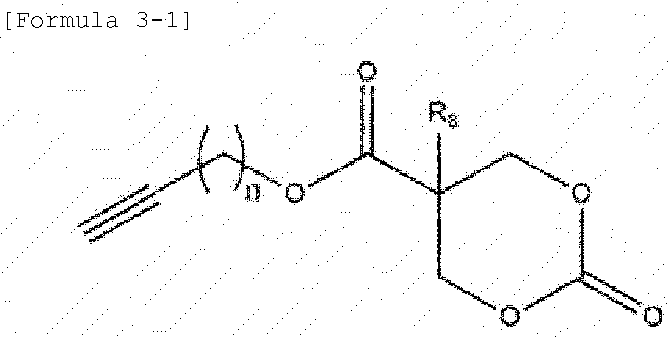

In Formula 3-1, n may be a natural number of 1 to 8, preferably, a natural number of 1 to 5, and may most preferably be a natural number of 1 to 3.

In Formula 3-1, R₈ may be H or an alkyl group having 1 to 10 carbon atoms, and may preferably be H or a methyl group.

Specifically, the compound of Formula 3 may be a compound of Formula 3-2 below.

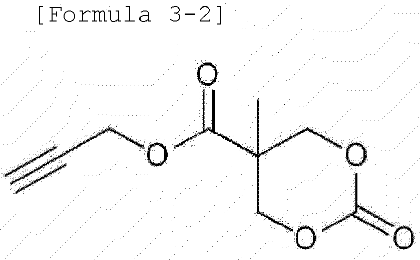

The first additive included in the non-aqueous electrolyte of the present invention forms a polyurea- and polyurethane-based film on the surface of the positive/negative electrode by containing an isocyanate functional group. Such a polymeric film may be formed more stably and robustly particularly when used with the propargyl-based additive such as Formulae 2 and 3. The reason for this is that a propargyl group-based film is formed between the polymeric films to help to strongly link to the surface of the positive/negative electrode. Also, the reason for this is that the propargyl group-based additives act as a linker between the polymeric films resulting from the first additive while being present in a polymer structure. Accordingly, since a lithium secondary battery including the non-aqueous electrolyte of the present invention has a stable film, it may suppress an additional side reaction and may reduce performance degradation even under volume expansion of the negative electrode which occurs during charge and discharge. Thus, since the non-aqueous electrolyte of the present invention may form a stable and highly durable electrode-electrolyte interface even at high temperatures and may suppress an unnecessary electrolyte decomposition side reaction, a lithium secondary battery with improved overall performance may be achieved.

In the non-aqueous electrolyte according to the present invention, the first additive may be included in an amount of 0.01 part by weight to 5 parts by weight, preferably 0.05 part by weight to 3.0 parts by weight, and more preferably 0.10 part by weight to 2.0 parts by weight based on 100 parts by weight of the non-aqueous electrolyte. In a case in which the amount of the first additive satisfies the above range, an effect of forming a film on the negative electrode is sufficient to have an effect of excellent high-temperature storage characteristics and life characteristics at high temperatures.

In the non-aqueous electrolyte according to the present invention, the second additive may be included in an amount of 0.01 part by weight to 5 parts by weight, preferably 0.05 part by weight to 3.0 parts by weight, and more preferably 0.10 part by weight to 2.5 parts by weight based on 100 parts by weight of the non-aqueous electrolyte. In a case in which the amount of the first additive satisfies the above range, the effect of forming a film on the negative electrode is sufficient to have the effect of excellent high-temperature storage characteristics and life characteristics at high temperatures.

In the non-aqueous electrolyte of the present invention, the first additive and the second additive may be included in a weight ratio of 1:0.002 to 1:500, preferably 1:0.01 to 1:300, and most preferably 1:0.02 to 1:250. In a case in which the above range is satisfied, since elasticity of the SEI film is in an appropriate range, the SEI film may be firmly maintained during charge and discharge or at high temperatures.

The non-aqueous electrolyte according to the present invention may include a lithium salt. The lithium salt is used as an electrolyte salt in a lithium secondary battery, wherein it is used as a medium for transferring ions. Typically, the lithium salt, for example, may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄-, AlO₂-, PF₆-, CF₃SO₃-, CH₃CO₂-, CF₃CO₂-, AsF₆-, SbF₆-, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂ (lithium bis (fluorosulfonyl) imide; LiFSI), LiN(SO₂CF₂CF₃)₂ (lithium bis(perfluoroethanesulfonyl)imide; LiBETI), and LiN(SO₂CF₃)₂ (lithium bis(trifluoromethanesulfonyl)imide; LiTFSI) or a mixture of two or more thereof. In addition to these materials, a lithium salt typically used in an electrolyte of a lithium secondary battery may be used without limitation.

The lithium salt may be appropriately changed in a normally usable range, but may be included in a concentration of 0.5 M to 5.0 M, preferably 1.0 M to 3.0 M, and more preferably 1.2 M to 2.0 M in the electrolyte to obtain an optimum effect of forming a film for preventing corrosion of the surface of the electrode. In a case in which the concentration of the lithium salt satisfies the above range, since an effect of improving cycle characteristics during high-temperature storage of the lithium secondary battery is sufficient and viscosity of the non-aqueous electrolyte is appropriate, electrolyte impregnability may be improved.

The non-aqueous electrolyte according to the present invention may include an organic solvent. The organic solvent may include at least one organic solvent selected from the group consisting of a cyclic carbonate-based organic solvent, a linear carbonate-based organic solvent, a linear ester-based organic solvent, and a cyclic ester-based organic solvent.

The additive according to the present invention is particularly effective when a cyclic carbonate solvent is used. In a case in which a conventional electrolyte additive is used together with the cyclic carbonate solvent, since an SEI film formed by decomposition of the cyclic carbonate solvent is difficult to be maintained due to a volume change of the negative electrode which occurs during cycles, there has been a problem in that the decomposition of the solvent continues. As a result, there has been a problem in that ionic conductivity of an electrolyte solution is reduced to degrade cycle characteristics. However, in a case in which a combination of the additive according to the present invention with the cyclic carbonate solvent is used, since a robust SEI film may be formed, there is an effect of maintaining high cycle characteristics.

The cyclic carbonate-based organic solvent is an organic solvent which may well dissociate the lithium salt in the electrolyte due to high permittivity as a highly viscous organic solvent, wherein specific examples of the cyclic carbonate-based organic solvent may be at least one organic solvent selected from the group consisting of ethylene carbonate (EC), propylene carbonate (PC), fluoroethylene carbonate (FEC), 1,2-butylene carbonate, 2,3-butylene carbonate, 1,2-pentylene carbonate, 2,3-pentylene carbonate, and vinylene carbonate, and, among them, the cyclic carbonate-based organic solvent may include fluoroethylene carbonate (FEC).

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and, among them, the linear carbonate-based organic solvent may include diethyl carbonate (DEC).

Furthermore, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent to prepare an electrolyte having high ionic conductivity.

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

Also, the cyclic ester-based organic solvent may include at least one organic solvent selected from the group consisting of γ-butyrolactone, γ-valerolactone, γ-caprolactone, σ-valerolactone, and ε-caprolactone.

The organic solvent may be used by adding an organic solvent typically used in a non-aqueous electrolyte without limitation, if necessary. For example, the organic solvent may further include at least one organic solvent selected from an ether-based organic solvent, a glyme-based solvent, and a nitrile-based organic solvent.

As the ether-based solvent, any one selected from the group consisting of dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent as well as less reactivity with metal, wherein the glyme-based solvent may include at least one selected from the group consisting of dimethoxyethane (glyme, DME), diethoxyethane, diglyme, tri-glyme (Triglyme), and tetra-glyme (TEGDME), but is not limited thereto.

The nitrile-based solvent may be at least one selected from the group consisting of acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

Also, the non-aqueous electrolyte of the present invention may further include a known electrolyte additive in the non-aqueous electrolyte, if necessary, in order to prevent the occurrence of collapse of the negative electrode due to decomposition of the non-aqueous electrolyte in a high output environment or to further improve low-temperature high rate discharge characteristics, high-temperature stability, overcharge prevention, and an effect of suppressing battery swelling at high temperature.

Typical examples of the other electrolyte additives may include at least one additive for forming a SEI film which is selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may include vinylene carbonate (VC) or vinyl ethylene carbonate.

The halogen-substituted carbonate-based compound may include fluoroethylene carbonate (FEC).

The sultone-based compound may include at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sulfate-based compound may include ethylene sulfate (Esa), trimethylene sulfate (TMS), or methyl trimethylene sulfate (MTMS).

The phosphate-based compound may include at least one compound selected from the group consisting of lithium difluoro (bisoxalato)phosphate, lithium difluorophosphate, tris(trimethyl silyl)phosphate, tris(trimethyl silyl)phosphite, tris(2,2,2-trifluoroethyl)phosphate, and tris(2,2,2-trifluoroethyl)phosphite.

The borate-based compound may include tetraphenylborate, lithium difluoro(oxalato)borate (LiODFB), and lithium bis (oxalato) borate (LiB (C₂O₄)₂, LiBOB) .

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte, wherein the lithium salt-based compound may include lithium difluorophosphate (LiDFP), LiPO₂F₂, or LiBF₄.

In a case in which, among these other electrolyte additives, a combination of vinylene carbonate (VC), 1,3-propane sultone (PS), ethylene sulfate (Esa), and lithium difluorophosphate (LiDFP) is additionally included, a more robust SEI film may be formed on the surface of the negative electrode during an initial activation process of the secondary battery, and high-temperature stability of the secondary battery may be improved by suppressing generation of a gas which may be generated due to the decomposition of the electrolyte at high temperature.

Two or more other electrolyte additives may be mixed and used, and the other electrolyte additives may be included in an amount of 0.050 wt% to 20 wt%, particularly 0.10 wt% to 15 wt%, and preferably 0.30 wt% to 10 wt% based on a total weight of the non-aqueous electrolyte. When the amount of the other electrolyte additives satisfies the above range, an effect of improving ionic conductivity and cycle characteristics is more excellent.

### Lithium Secondary Battery

The present invention also provides a lithium secondary battery including the non-aqueous electrolyte.

Specifically, the lithium secondary battery includes a positive electrode including a positive electrode active material, a negative electrode including a negative electrode active material, a separator disposed between the positive electrode and the negative electrode, and the above-described non-aqueous electrolyte.

In this case, the lithium secondary battery of the present invention may be prepared according to a typical method known in the art. For example, after an electrode assembly is formed by sequentially stacking a positive electrode, a negative electrode, and a separator between the positive electrode and the negative electrode, the electrode assembly is inserted into a battery case, and the lithium secondary battery of the present invention may be prepared by injecting the non-aqueous electrolyte according to the present invention.

### (1) Positive Electrode

The positive electrode may be prepared by coating a positive electrode collector with a positive electrode material mixture slurry including a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li (NiₚCo_{q}Mnᵣ)O₂ (where 0<p<1, 0<q<1, 0<r<1, and p+q+r=1) or Li (Niₚ₁Co_{q1}Mnᵣ₁)O₄ (where 0<p1<2, 0<q1<2, 0<r1<2, and p1+q1+r1=2), etc.), or lithium-nickel-cobalt-transition metal (M) oxide (e.g., Li (Niₚ₂Co_{q2}Mnᵣ₂M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r2, and s2 are atomic fractions of each independent elements, wherein 0<p2<1, 0<q2<1, 0<r2<1, 0<S2<1, and p2+q2+r2+S2=1), etc.), and any one thereof or a compound of two or more thereof may be included.

Among these materials, in terms of the improvement of capacity characteristics and stability of the battery, the lithium metal oxide may include LiCoO₂, LiMnO₂, LiNiO₂, lithium nickel manganese cobalt oxide (e.g., Li(Ni_{1/3}Mn_{1/3}Co_{1/3})O₂, Li (Ni_{0.6}Mn_{0.2}Co_{0.2})O₂, Li (Ni_{0.5}Mn_{0.3}Co_{0.2})O₂, Li (Ni_{0.7}Mn_{0.15}Co_{0.15})O₂, and Li (Ni_{0.8}Mn_{0.1}Co_{0.1})O₂, etc.), or lithium nickel cobalt aluminum oxide (e.g., LiNi_{0.8}Co_{0.15}Al_{0.05}O₂, etc.), and any one thereof or a mixture of two or more thereof may be used.

Among them, in terms of the fact that the capacity characteristics of the battery may be most improved, a positive electrode active material having a nickel content of 80 atm% or more may be used. For example, the lithium transition metal oxide may include one represented by [Formula 4] below.

[Formula 4] LiₓNiₐCo_{b}M¹_{c}M²_{d}O₂

In Formula 4, M¹ is at least one selected from Mn and Al, and may be preferably Mn or a combination of Mn and Al in terms of durability.

M² may be at least one selected from the group consisting of zirconium (Zr), boron (B), tungsten (W), magnesium (Mg), Cerium (Ce), hafnium (Hf), tantalum (Ta), lanthanum (La), titanium (Ti), strontium (Sr), barium (Ba), fluorine (F), phosphorus (P), and sulfur (S).

x represents an atomic fraction of lithium in the lithium transition metal oxide, wherein x may satisfy 0.90≤x≤1.1, may preferably satisfy 0.95≤x≤1.08, and may more preferably satisfy 1.0≤x≤1.08.

a represents an atomic fraction of nickel among metallic elements excluding lithium in the lithium transition metal oxide, wherein a may satisfy 0.80≤a<1.0, may preferably satisfy 0.80≤a≤0.95, and may more preferably satisfy 0.80≤a≤0.90. In a case in which the amount of the nickel satisfies the above range, high capacity characteristics may be achieved.

b represents an atomic fraction of cobalt among the metallic elements excluding lithium in the lithium transition metal oxide, wherein b may satisfy 0<b<0.2, 0<b≤0.15, or 0.01≤b≤0.10.

c represents an atomic fraction of M¹ among the metallic elements excluding lithium in the lithium transition metal oxide, wherein c may satisfy 0<c<0.2, 0<c≤0.15, or 0.01≤c≤0.10.

d represents an atomic fraction of M² among the metallic elements excluding lithium in the lithium transition metal oxide, wherein d may satisfy 0≤d≤0.1 or 0≤d≤0.05.

The positive electrode active material may be included in an amount of 60 wt% to 99 wt%, preferably 70 wt% to 99 wt%, and more preferably 80 wt% to 98 wt% based on a total weight of a solid content excluding the solvent in the positive electrode material mixture slurry.

The positive electrode active material may be included in an amount of 60 wt% to 99 wt%, preferably 70 wt% to 99 wt%, and more preferably 80 wt% to 98 wt% based on the total weight of the solid content excluding the solvent in the positive electrode material mixture slurry.

The binder is a component that assists in the binding between the active material and the conductive agent and in the binding with the current collector.

Examples of the binder may be polyvinylidene fluoride, polyvinyl alcohol, starch, hydroxypropylcellulose, regenerated cellulose, polyvinylpyrrolidone, polytetrafluoroethylene, polyethylene (PE), polypropylene, an ethylene-propylene-diene monomer, a sulfonated ethylene-propylene-diene monomer, a styrene-butadiene rubber, a fluoro rubber, or various copolymers thereof.

The binder may commonly be included in an amount of 1 wt% to 20 wt%, preferably 1 wt% to 15 wt%, and more preferably 1 wt% to 10 wt% based on the total weight of the solid content excluding the solvent in the positive electrode material mixture slurry.

The conductive agent is a component for further improving conductivity of the positive electrode active material, wherein it may be added in an amount of 1 wt% to 20 wt% based on the total weight of the solid content in the positive electrode material mixture slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a welldeveloped crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content excluding the solvent in the positive electrode material mixture slurry.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

### (2) Negative Electrode

The negative electrode, for example, may be prepared by coating a negative electrode material mixture slurry including a negative electrode active material, a binder, a conductive agent, and a solvent on a negative electrode collector, or a graphite electrode formed of carbon (C) or a metal itself may be used as the negative electrode.

For example, in a case in which the negative electrode is prepared by coating the negative electrode material mixture slurry on the negative electrode collector, the negative electrode collector generally has a thickness of 3 µm to 500 µm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

Also, the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), Ni, sodium (Na), potassium (K), rubidium (Rb), cesium (Cs), francium (Fr), beryllium (Be), Mg, calcium (Ca), Sr, silicon (Si), antimony (Sb), lead (Pb), indium (In), zinc (Zn), Ba, radium (Ra), germanium (Ge), Al, and tin (Sn) or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, or Ge; Me': Al, B, P, Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, scandium (Sc), yttrium (Y), Ti, Zr, Hf, rutherfordium (Rf), V, niobium (Nb), Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, Ge, P, arsenic (As), Sb, bismuth (Bi), S, selenium (Se), tellurium (Te), polonium (Po), and a combination thereof.

The transition metal oxide may include lithiumcontaining titanium composite oxide (LTO), vanadium oxide, and lithium vanadium oxide.

The additive according to the present invention is particularly effective when Si or SiOₓ (0<x≤2) is used as the negative electrode active material. Specifically, in a case in which a Si-based negative electrode active material is used, degradation of life characteristics is promoted due to extreme volume expansion-contraction during cycles if a robust SEI layer is not formed on the surface of the negative electrode during initial activation. However, since the additive according to the present invention may form an elastic and robust SEI layer, it may improve life characteristics and storage characteristics of a secondary battery by using the Si-based negative electrode active material.

The negative electrode active material may be included in an amount of 60 wt% to 99 wt%, preferably 70 wt% to 99 wt%, and more preferably 80 wt% to 98 wt% based on a total weight of solid content in the negative electrode material mixture slurry.

Examples of the binder may be polyvinylidene fluoride (PVDF), polyvinyl alcohol, starch, hydroxypropylcellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof. Specifically, styrene-butadiene rubber (SBR)-carboxymethyl cellulose (CMC) may be used in terms of high thickening.

The binder may be commonly included in an amount of 1 wt% to 20 wt%, preferably 1 wt% to 15 wt%, and more preferably 1 wt% to 10 wt% based on the total weight of the solid content excluding the solvent in the negative electrode material mixture slurry.

The conductive agent is a component for further improving conductivity of the negative electrode active material, wherein the conductive agent may be added in an amount of 1 wt% to 20 wt% based on the total weight of the solid content in the negative electrode material mixture slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite with a welldeveloped crystal structure, artificial graphite, or graphite; conductive fibers such as carbon fibers or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the negative electrode material mixture slurry.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, preferably, 70 wt% to 90 wt%.

In a case in which the metal itself is used as the negative electrode, the negative electrode may be a metal thin film itself or may be prepared by a method in which the metal is physically bonded, rolled, or deposited on the negative electrode collector. As the deposition method, an electrical deposition method or a chemical vapor deposition method for the metal may be used.

For example, the metal thin film itself or the metal to be bonded/rolled/deposited on the negative electrode collector may include one type of metal selected from the group consisting of lithium (Li), nickel (Ni), tin (Sn), copper (Cu), and indium (In) or an alloy of two types of metals.

### (3) Separator

Also, a conventional porous polymer film typically used as a separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

Specifically, a safety reinforced separator (SRS), in which a coating layer containing a ceramic component or a polymer material is formed to secure heat resistance or mechanical strength, may be used as the separators included in the electrode assembly of the present invention.

Specifically, the separators included in the electrode assembly of the present invention include a porous separator support and a porous coating layer entirely coated on one or both surfaces of the separator support, wherein the coating layer may include a mixture of inorganic particles, which are selected from metal oxide, metalloid oxide, metal fluoride, metal hydroxide, and a combination thereof, and a binder polymer that connects and fixes the inorganic particles to each other.

The coating layer may include at least one selected from Al₂O₃, SiO₂, TiO₂, SnO₂, CeO₂, MgO, NiO, CaO, ZnO, ZrO₂, Y₂O₃, SrTiO₃, BaTiO₃, Mg(OH)₂, and MgF, as the inorganic particles. Herein, the inorganic particles may improve thermal stability of the separator. That is, the inorganic particles may prevent the separator from shrinking at high temperatures. In addition, the binder polymer may improve mechanical stability of the separator by fixing the inorganic particles.

A shape of the lithium secondary battery of the present invention is not particularly limited, but a cylindrical type using a can, a prismatic type, a pouch type, or a coin type may be used.

Hereinafter, the present invention will be described in detail, according to specific examples. However, the following examples are merely presented to exemplify the present invention, and the scope of the present invention is not limited thereto.

### Examples

### Example 1

### (Preparation of Non-aqueous Electrolyte)

A non-aqueous solvent was prepared by dissolving LiPF₆ in an organic solvent (ethylene carbonate (EC):ethyl methyl carbonate (EMC) = 20:80 volume ratio) such that a concentration of the LiPF₆ was 1.2 M, and a non-aqueous electrolyte was prepared by adding 0.01 g of the compound of Formula 1-1 below and 0.01 g of the compound of Formula 2-1 below to 99.98 g of the non-aqueous solvent.

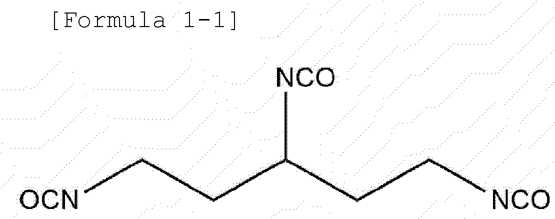

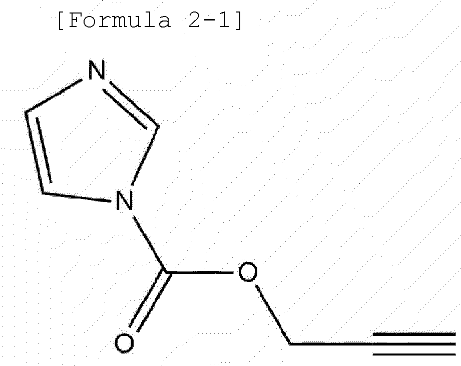

### (Lithium Secondary Battery Preparation)

A positive electrode active material (LiNi_{0.85}Co_{0.05}Mn_{0.08}Al_{0.02}O₂):a conductive agent (carbon nanotubes):a binder (polyvinylidene fluoride) were added in a weight ratio of 97.74:0.7:1.56 to N-methyl-2-pyrrolidone (NMP), as a solvent, to prepare a positive electrode slurry (solid content 75.5 wt%). One surface of a 15 µm thick positive electrode collector (Al thin film) was coated with the positive electrode slurry, dried, and roll-pressed to prepare a positive electrode.

A negative electrode active material (silicon; Si):a conductive agent (carbon black):a binder (styrene-butadiene rubber (SBR)-carboxymethyl cellulose (CMC)) were added to N-methyl-2-pyrrolidone (NMP), as a solvent, in a weight ratio of 70:20.3:9.7 to prepare a negative electrode slurry (solid content 26 wt%). One surface of a 15 µm thick negative electrode collector (Cu thin film) was coated with the negative electrode slurry, dried, and roll-pressed to prepare a negative electrode.

After disposing a polyolefin-based porous separator coated with Al₂O₃ inorganic particles between the aboveprepared positive electrode and negative electrode in a dry room, a secondary battery was prepared by injecting the aboveprepared non-aqueous electrolyte.

### Example 2

A secondary battery was prepared in the same manner as in Example 1 except that a non-aqueous electrolyte was prepared by adding 0.01 g of the compound of Formula 1-1 and 0.01 g of the compound of Formula 3-2 below to 99.98 g of the non-aqueous solvent prepared in Example 1.

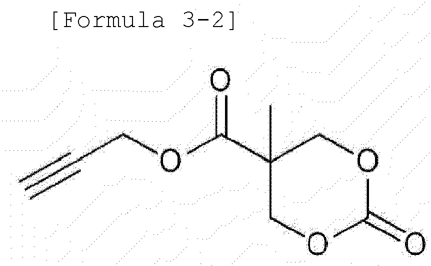

### Example 3

A secondary battery was prepared in the same manner as in Example 1 except that a non-aqueous electrolyte was prepared by adding 0.01 g of the compound of Formula 1-1 and 5 g of the compound of Formula 2-1 to 94.99 g of the non-aqueous solvent prepared in Example 1.

### Example 4

A secondary battery was prepared in the same manner as in Example 1 except that a non-aqueous electrolyte was prepared by adding 0.01 g of the compound of Formula 1-1 and 5 g of the compound of Formula 3-2 to 94.99 g of the non-aqueous solvent prepared in Example 1.

### Example 5

A secondary battery was prepared in the same manner as in Example 1 except that a non-aqueous electrolyte was prepared by adding 5 g of the compound of Formula 1-1 and 0.01 g of the compound of Formula 2-1 to 94.99 g of the non-aqueous solvent prepared in Example 1.

### Example 6

A secondary battery was prepared in the same manner as in Example 1 except that a non-aqueous electrolyte was prepared by adding 5 g of the compound of Formula 1-1 and 0.01 g of the compound of Formula 3-2 to 94.99 g of the non-aqueous solvent prepared in Example 1.

### Example 7

A secondary battery was prepared in the same manner as in Example 1 except that a non-aqueous electrolyte was prepared by adding 5 g of the compound of Formula 1-1 and 5 g of the compound of Formula 2-1 to 90 g of the non-aqueous solvent prepared in Example 1.

### Example 8

A secondary battery was prepared in the same manner as in Example 1 except that a non-aqueous electrolyte was prepared by adding 5 g of the compound of Formula 1-1 and 5 g of the compound of Formula 3-2 to 90 g of the non-aqueous solvent prepared in Example 1.

### Example 9

A secondary battery was prepared in the same manner as in Example 1 except that a non-aqueous electrolyte was prepared by adding 0.01 g of the compound of Formula 1-2 below and 0.01 g of the compound of Formula 2-1 to 99.98 g of the non-aqueous solvent prepared in Example 1.

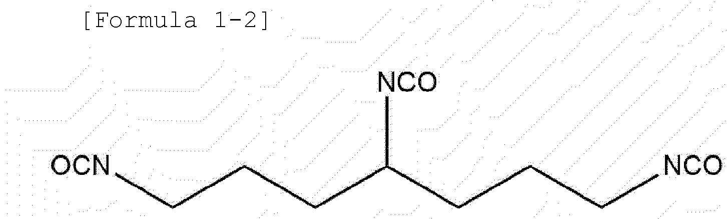

### Example 10

A secondary battery was prepared in the same manner as in Example 1 except that a non-aqueous electrolyte was prepared by adding 0.01 g of the compound of Formula 1-3 below and 0.01 g of the compound of Formula 2-1 to 99.98 g of the non-aqueous solvent prepared in Example 1.

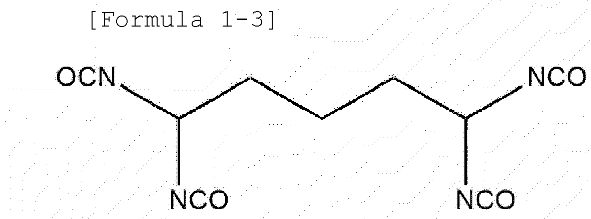

### Example 11

A secondary battery was prepared in the same manner as in Example 1 except that a non-aqueous electrolyte was prepared by adding 0.01 g of the compound of Formula 1-4 below and 0.01 g of the compound of Formula 2-1 to 99.98 g of the non-aqueous solvent prepared in Example 1.

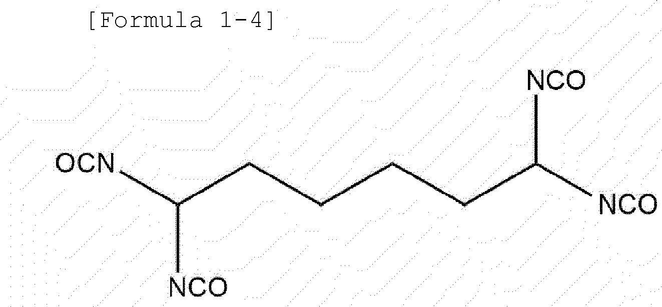

### Comparative Example 1

A secondary battery was prepared in the same manner as in Example 1 except that a non-aqueous electrolyte was prepared by adding 0.01 g of the compound of Formula 1-1 to 99.99 g of the non-aqueous solvent prepared in Example 1.

### Comparative Example 2

A secondary battery was prepared in the same manner as in Example 1 except that a non-aqueous electrolyte was prepared by adding 5 g of the compound of Formula 1-1 to 95 g of the non-aqueous solvent prepared in Example 1.

### Comparative Example 3

A secondary battery was prepared in the same manner as in Example 1 except that a non-aqueous electrolyte was prepared by adding 0.01 g of the compound of Formula 2-1 to 99.99 g of the non-aqueous solvent prepared in Example 1.

### Comparative Example 4

A secondary battery was prepared in the same manner as in Example 1 except that a non-aqueous electrolyte was prepared by adding 5 g of the compound of Formula 2-1 to 95 g of the non-aqueous solvent prepared in Example 1.

### Comparative Example 5

A secondary battery was prepared in the same manner as in Example 1 except that a non-aqueous electrolyte was prepared by adding 0.01 g of the compound of Formula 3-2 to 99.99 g of the non-aqueous solvent prepared in Example 1.

### Comparative Example 6

A secondary battery was prepared in the same manner as in Example 1 except that a non-aqueous electrolyte was prepared by adding 5 g of the compound of Formula 3-2 to 95 g of the non-aqueous solvent prepared in Example 1.

### Experimental Example 1 - High-temperature Cycle Characteristics Evaluation

Cycle characteristics were evaluated for each of the secondary batteries prepared in Examples 1 to 11 and Comparative Examples 1 to 6.

Specifically, after charging of each of the batteries prepared in Examples 1 to 11 and Comparative Examples 1 to 6 under constant current/constant voltage conditions (0.05 C cut off) at 0.33 C rate to 4.2 V at 45°C and discharging of each battery at a constant current of 0.33 C to 3.0 V were set as one cycle and 200 cycles of the charging and discharging were performed, a capacity retention after 200 cycles relative to initial capacity after 1 cycle was measured. Also, a resistance increase rate after 200 cycles relative to initial resistance after 1 cycle was measured. The results thereof are presented in Table 1 below.

**[Table 1]**

| | Capacity retention (%) | Resistance increase rate (%) |
|---|---|---|
| Example 1 | 90 | 6 |
| Example 2 | 92 | 8 |
| Example 3 | 91 | 8 |
| Example 4 | 90 | 6 |
| Example 5 | 91 | 8 |
| Example 6 | 90 | 7 |
| Example 7 | 91 | 7 |
| Example 8 | 90 | 6 |
| Example 9 | 90 | 6 |
| Example 10 | 90 | 5 |
| Example 11 | 91 | 7 |
| Comparative Example 1 | 84 | 19 |
| Comparative Example 2 | 82 | 20 |
| Comparative Example 3 | 81 | 17 |
| Comparative Example 4 | 84 | 20 |
| Comparative Example 5 | 84 | 19 |
| Comparative Example 6 | 82 | 19 |

### Experimental Example 2 - High-temperature Storage Characteristics Evaluation

High-temperature storage characteristics were evaluated for each of the secondary batteries prepared in Examples 1 to 11 and Comparative Examples 1 to 6.

Specifically, after fully charging each of the secondary batteries prepared in Examples 1 to 11 and Comparative Examples 1 to 6 to 4.2 V, each secondary battery was stored at 60°C for 8 weeks.

Before the storage, capacity of the fully charged secondary battery was measured to set it as initial capacity of the secondary battery.

After 8 weeks, capacity of the stored secondary battery was measured to calculate capacity that had been decreased during a storage period of 8 weeks. A percent ratio of the decreased capacity to the initial capacity of the secondary battery was calculated to derive a capacity retention after 8 weeks. Also, a percent ratio of the increased resistance to the initial resistance of the secondary battery was calculated to derive a resistance increase rate after 8 weeks. The results thereof are presented in Table 2 below.

**[Table 2]**

| | Capacity retention (%) | Resistance increase rate (%) |
|---|---|---|
| Example 1 | 95 | 7 |
| Example 2 | 96 | 8 |
| Example 3 | 95 | 7 |
| Example 4 | 95 | 7 |
| Example 5 | 96 | 7 |
| Example 6 | 94 | 6 |
| Example 7 | 95 | 8 |
| Example 8 | 94 | 7 |
| Example 9 | 95 | 7 |
| Example 10 | 96 | 9 |
| Example 11 | 94 | 6 |
| Comparative Example 1 | 85 | 16 |
| Comparative Example 2 | 87 | 21 |
| Comparative Example 3 | 86 | 20 |
| Comparative Example 4 | 85 | 17 |
| Comparative Example 5 | 86 | 20 |
| Comparative Example 6 | 83 | 17 |

### Experimental Example 3 - Thermal Stability Evaluation

Thermal stability was evaluated for each of the secondary batteries prepared in Examples 1 to 11 and Comparative Examples 1 to 6.

Specifically, after a formation process was performed on the lithium secondary batteries prepared in the examples and the comparative examples, the lithium secondary batteries were charged under constant current/constant voltage conditions (0.05 C cut off) at 0.33 C rate to 4.2 V at 25°C such that the lithium secondary batteries were fully charged to a state of charge (SOC) of 100%. A hot box evaluation test was conducted in which the fully-charged batteries were heated to 140°C at a heating rate of 5°C/min and were then left standing for 1 hour to confirm whether or not the batteries were ignited. A case, in which ignition did not occur, was evaluated as Pass, and a case, in which ignition occurred, was evaluated as Fail, and the results thereof are presented in Table 3 below.

**[Table 3]**

| | Hot box test results |
|---|---|
| Example 1 | Pass |
| Example 2 | Pass |
| Example 3 | Pass |
| Example 4 | Pass |
| Example 5 | Pass |
| Example 6 | Pass |
| Example 7 | Pass |
| Example 8 | Pass |
| Example 9 | Pass |
| Example 10 | Pass |
| Example 11 | Pass |
| Comparative Example 1 | Fail |
| Comparative Example 2 | Pass |
| Comparative Example 3 | Fail |
| Comparative Example 4 | Fail |
| Comparative Example 5 | Fail |
| Comparative Example 6 | Fail |

## Claims

1. A non-aqueous electrolyte comprising:
a lithium salt;
an organic solvent;
a compound of Formula 1 as a first additive; and
a compound of Formula 2 or Formula 3 as a second additive: 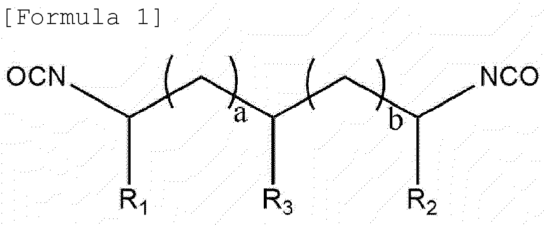
wherein, in Formula 1,
R₁ to R₃ are each independently hydrogen (H) or -N=C=O, wherein at least one of R₁ to R₃ is -N=C=O, and
a and b are each an integer of 0 to 4, 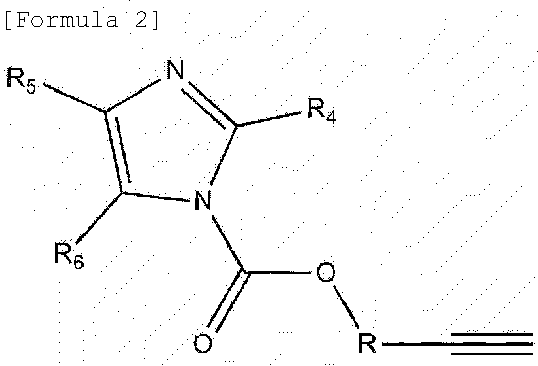
wherein, in Formula 2,
R is an unsubstituted or substituted alkylene group having 1 to 3 carbon atoms, and
R₄ to R₆ are each independently H or an alkyl group or nitrile group having 1 to 3 carbon atoms, 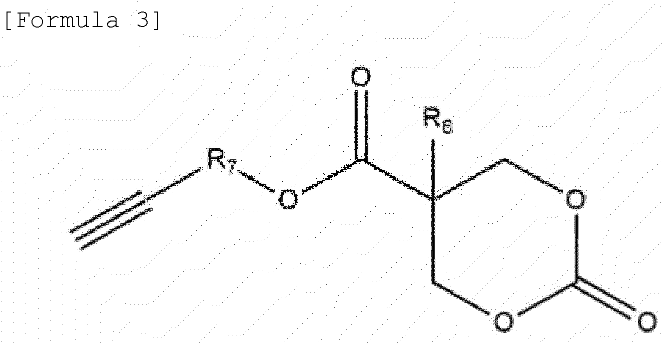
wherein, in Formula 3,
R₇ is an alkylene group having 1 to 8 carbon atoms, and
R₈ is selected from the group consisting of H, an alkyl group having 1 to 10 carbon atoms, and a cycloalkyl group having 3 to 8 carbon atoms.

2. The non-aqueous electrolyte of claim 1, wherein the compound of Formula 1 is any one selected from Formulae 1-1 to 1-4.

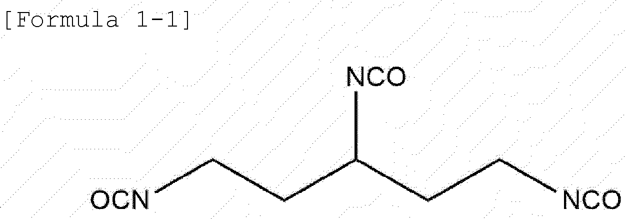

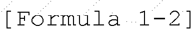

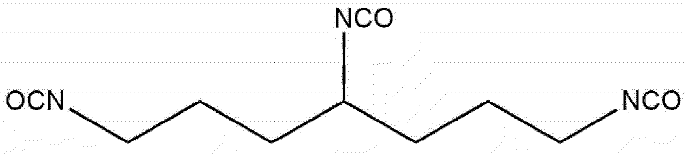

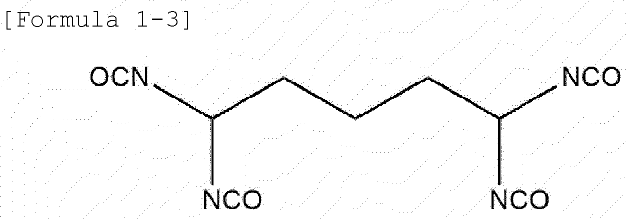

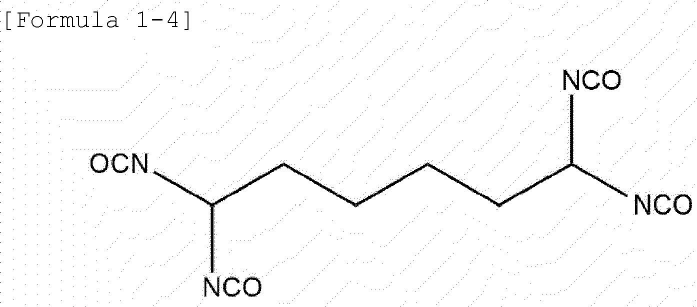

3. The non-aqueous electrolyte of claim 1, wherein the compound of Formula 2 is a compound of Formula 2-1.

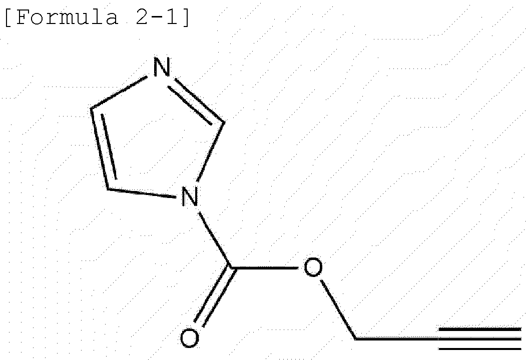

4. The non-aqueous electrolyte of claim 1, wherein the compound of Formula 3 is a compound of Formula 3-1. 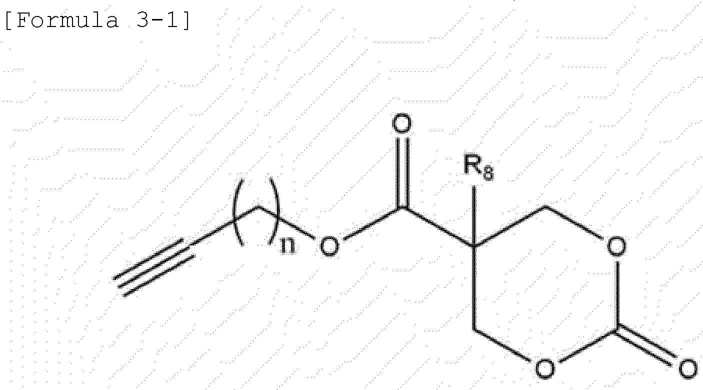 wherein, in Formula 3-1,
n is a natural number of 1 to 8, and
R₈ is H or an alkyl group having 1 to 10 carbon atoms.

5. The non-aqueous electrolyte of claim 1, wherein the compound of Formula 3 is a compound of Formula 3-2.

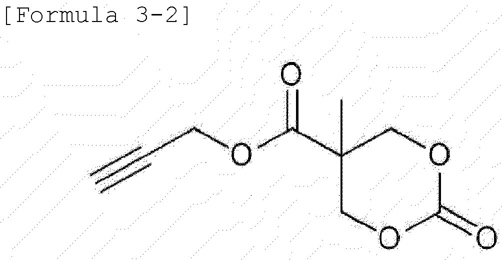

6. The non-aqueous electrolyte of claim 1, wherein the first additive is included in an amount of 0.01 part by weight to 5 parts by weight based on 100 parts by weight of the non-aqueous electrolyte.

7. The non-aqueous electrolyte of claim 1, wherein the second additive is included in an amount of 0.01 part by weight to 5 parts by weight based on 100 parts by weight of the non-aqueous electrolyte.

8. The non-aqueous electrolyte of claim 1, wherein the first additive and the second additive are included in a weight ratio of 1:0.002 to 1:500.

9. The non-aqueous electrolyte of claim 1, wherein the lithium salt is at least one selected from the group consisting of LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂, LiN(SO₂CF₂CF₃)₂, and LiN(SO₂CF₃)₂.

10. The non-aqueous electrolyte of claim 1, wherein the lithium salt is included in a concentration of 0.5 M to 5.0 M.

11. The non-aqueous electrolyte of claim 1, wherein the organic solvent comprises at least one organic solvent selected from the group consisting of a cyclic carbonate-based organic solvent, a linear carbonate-based organic solvent, a linear ester-based organic solvent, and a cyclic ester-based organic solvent.

12. A lithium secondary battery comprising:
a positive electrode;
a negative electrode; and
the non-aqueous electrolyte of any one of claims 1 to 11.

13. The lithium secondary battery of claim 12, wherein the positive electrode comprises a lithium nickel-based oxide having an amount of nickel among transition metals excluding lithium of 80 atm% or more as a positive electrode active material.

14. The lithium secondary battery of claim 13, wherein the lithium nickel-based oxide is represented by [Formula 4].
[Formula 4] LiₐNi_{b}Co_{c}M¹_{d}M²ₑO₂
wherein, in Formula 4, M¹ is manganese (Mn), aluminum (Al), or a combination thereof, M² is at least one selected from the group consisting of zirconium (Zr), tungsten (W), yttrium (Y), barium (Ba), calcium (Ca), titanium (Ti), magnesium (Mg), tantalum (Ta), and niobium (Nb), and 0.8≤a≤1.2, 0.8≤b<1, 0<c<0.2, 0<d<0.2, and 0≤e≤0.1.

15. The lithium secondary battery of claim 12, wherein the negative electrode comprises at least one selected from the group consisting of silicon (Si) and SiOₓ (0<x≤2) as a negative electrode active material.

## Patentansprüche

1. Nichtwässriger Elektrolyt, umfassend:
ein Lithiumsalz,
ein organisches Lösungsmittel,
eine Verbindung der Formel 1 als ein erstes Additiv und
eine Verbindung der Formel 2 oder Formel 3 als ein zweites Additiv: 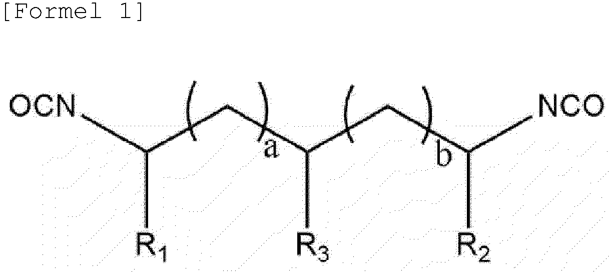
wobei in Formel 1
R₁ bis R₃ jeweils unabhängig Wasserstoff (H) oder -N=C=O sind, wobei mindestens eines von R₁ bis R₃ -N=C=O ist, und
a und b jeweils eine ganze Zahl = bis 4 sind, 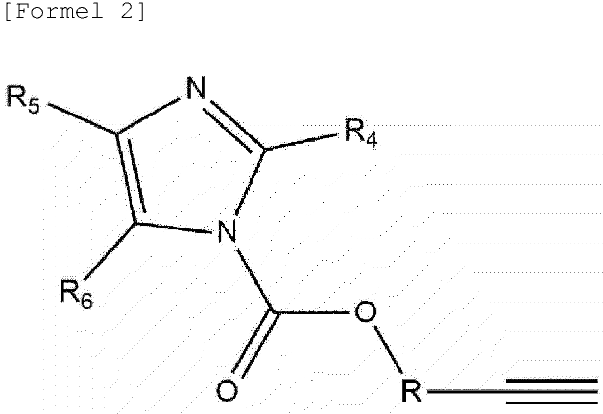
wobei in Formel 2
R eine unsubstituierte oder substituierte Alkylengruppe mit 1 bis 3 Kohlenstoffatomen ist und
R₄ bis R₆ jeweils unabhängig H oder eine Alkylgruppe oder eine Nitrilgruppe mit 1 bis 3 Kohlenstoffatomen sind, 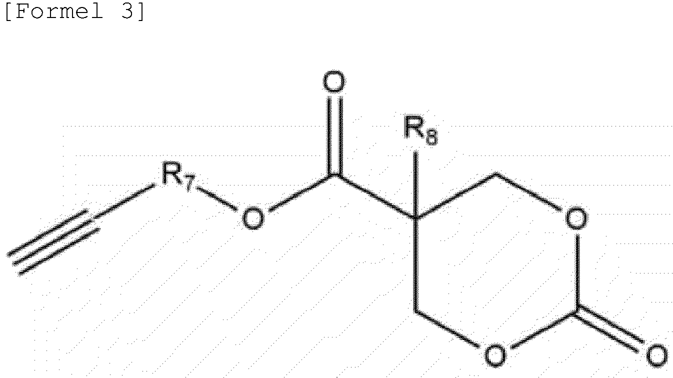
wobei in Formel 3 R₇ eine Alkylengruppe mit 1 bis 8 Kohlenstoffatomen ist und
R₈ aus der Gruppe, bestehend aus H, einer Alkylgruppe mit 1 bis 10 Kohlenstoffatomen und einer Cycloalkylgruppe mit 3 bis 8 Kohlenstoffatomen, ausgewählt ist.

2. Nichtwässriger Elektrolyt nach Anspruch 1, wobei die Verbindung der Formel 1 eine, ausgewählt aus den Formeln 1-1 bis 1-4, ist:

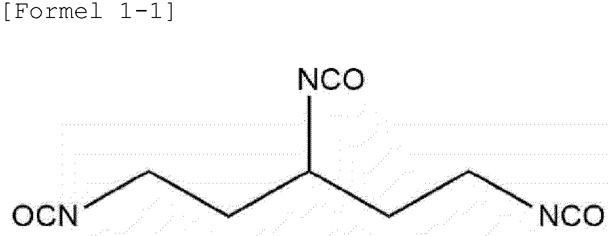

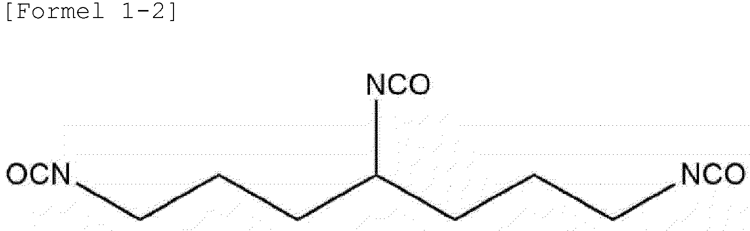

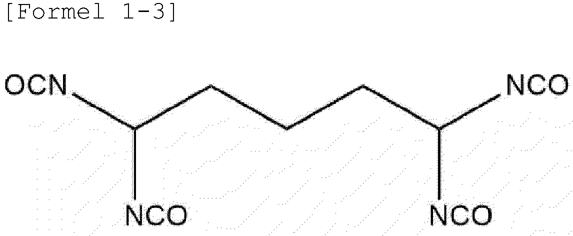

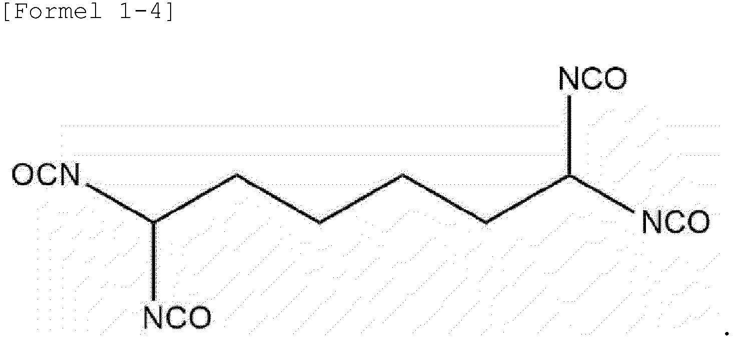

3. Nichtwässriger Elektrolyt nach Anspruch 1, wobei die Verbindung der Formel 2 eine Verbindung der Formel 2-1 ist:

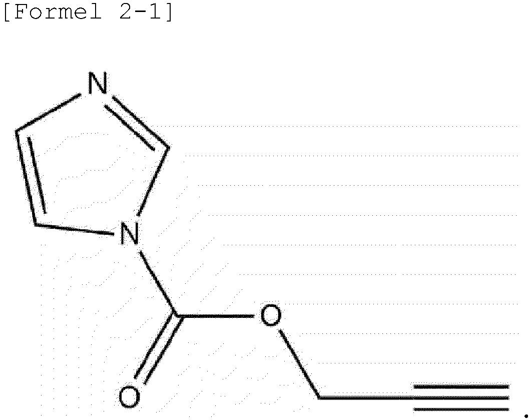

4. Nichtwässriger Elektrolyt nach Anspruch 1, wobei die Verbindung der Formel 3 eine Verbindung der Formel 3-1 ist: 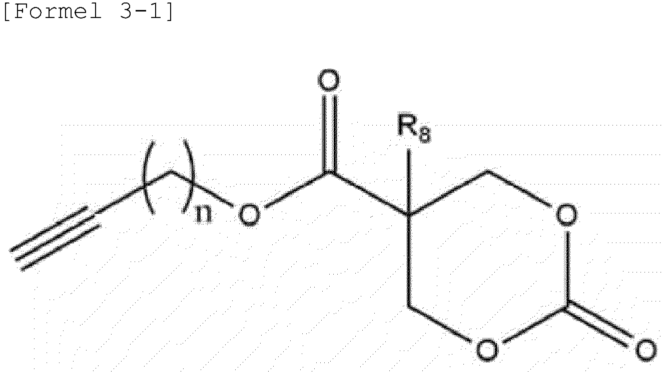 wobei in Formel 3-1
n eine natürliche Zahl von 1 bis 8 ist und
R₈ H oder eine Alkylgruppe mit 1 bis 10 Kohlenstoffatomen ist.

5. Nichtwässriger Elektrolyt nach Anspruch 1, wobei die Verbindung der Formel 3 eine Verbindung der Formel 3-2 ist:

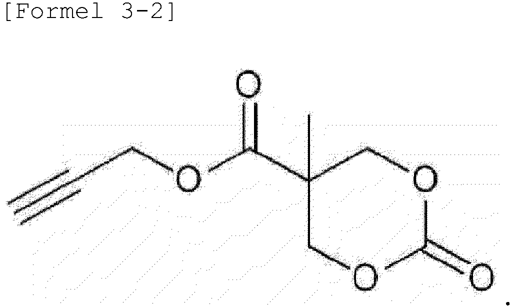

6. Nichtwässriger Elektrolyt nach Anspruch 1, wobei das erste Additiv in einer Menge von 0,01 Gewichtsteilen bis 5 Gewichtsteilen, bezogen auf 100 Gewichtsteile des nichtwässrigen Elektrolyten, enthalten ist.

7. Nichtwässriger Elektrolyt nach Anspruch 1, wobei das zweite Additiv in einer Menge von 0,01 Gewichtsteilen bis 5 Gewichtsteilen, bezogen auf 100 Gewichtsteile des nichtwässrigen Elektrolyten, enthalten ist.

8. Nichtwässriger Elektrolyt nach Anspruch 1, wobei das erste Additiv und das zweite Additiv in einem Gewichtsverhältnis von 1:0,002 bis 1:500 enthalten sind.

9. Nichtwässriger Elektrolyt nach Anspruch 1, wobei das Lithiumsalz mindestens eines, ausgewählt aus der Gruppe, bestehend aus LiCl, LiBr, LiI, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂, LiN(SO₂CF₂CF₃)₂ und LiN(SO₂CF₃)₂, ist.

10. Nichtwässriger Elektrolyt nach Anspruch 1, wobei das Lithiumsalz in einer Konzentration von 0,5 M bis 5,0 M enthalten ist.

11. Nichtwässriger Elektrolyt nach Anspruch 1, wobei das organische Lösungsmittel mindestens ein organisches Lösungsmittel, ausgewählt aus der Gruppe, bestehend aus einem organischen Lösungsmittel auf Basis eines cyclischen Carbonats, einem organischen Lösungsmittel auf Basis eines linearen Carbonats, einem organischen Lösungsmittel auf Basis eines linearen Esters und einem organischen Lösungsmittel auf Basis eines cyclischen Esters, umfasst.

12. Lithiumsekundärbatterie, umfassend:
eine positive Elektrode,
eine negative Elektrode und
den nichtwässrigen Elektrolyten nach einem der Ansprüche 1 bis 11.

13. Lithiumsekundärbatterie nach Anspruch 12, wobei die positive Elektrode ein Oxid auf Lithiumnickelbasis mit einer Nickelmenge unter Übergangsmetallen mit Ausnahme von Lithium von 80 At-% oder mehr als ein Aktivmaterial für eine positive Elektrode umfasst.

14. Lithiumsekundärbatterie nach Anspruch 13, wobei das Oxid auf Lithiumnickelbasis durch [Formel 4] dargestellt ist:
[Formel 4] LiₐNi_{b}Co_{c}M¹_{d}M²ₑO₂
wobei in Formel 4 M¹ Mangan (Mn), Aluminium (Al) oder eine Kombination davon ist, M² mindestens eines, ausgewählt aus der Gruppe, bestehend aus Zirkonium (Zr), Wolfram (W), Yttrium (Y), Barium (Ba), Calcium (Ca), Titan (Ti), Magnesium (Mg), Tantal (Ta) und Niob (Nb), ist und 0,8≤a≤1,2, 0,8≤b<1, 0<c<0,2, 0<d<0,2 und 0≤e≤0,1 ist.

15. Lithiumsekundärbatterie nach Anspruch 12, wobei die negative Elektrode mindestens eines, ausgewählt aus der Gruppe, bestehend aus Silicium (Si) und SiOₓ (0<x≤2) als ein Aktivmaterial für eine negative Elektrode umfasst.

## Revendications

1. Électrolyte non aqueux comprenant :
un sel de lithium ;
un solvant organique ;
un composé de Formule 1 en tant que premier additif ; et
un composé de Formule 2 ou de Formule 3 en tant que deuxième additif : 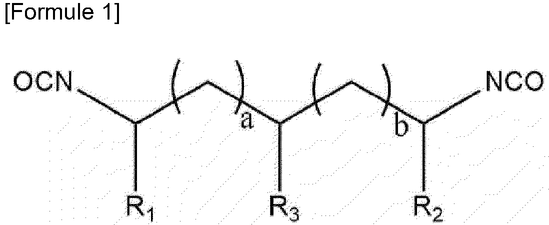
dans lequel, dans la Formule 1,
R₁ à R₃ sont chacun indépendamment hydrogène (H) ou -N=C=O, dans lequel au moins un de R₁ à R₃ est -N=C=O, et
a et b sont chacun un nombre entier de 0 à 4, 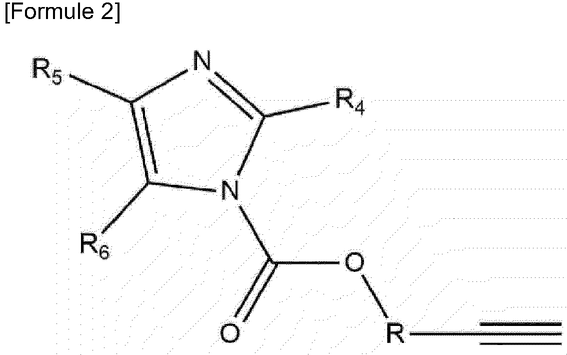
dans lequel, dans la Formule 2,
R est un groupe alkylène non substitué ou substitué présentant 1 à 3 atomes de carbone, et
R₄ à R₆ sont chacun indépendamment H ou un groupe alkyle ou un groupe nitrile présentant 1 à 3 atomes de carbone, 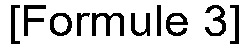 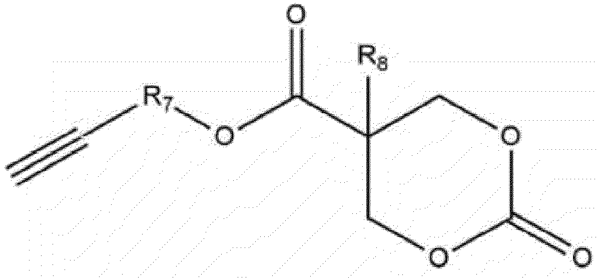
dans lequel, dans la Formule 3,
R₇ est un groupe alkylène présentant 1 à 8 atomes de carbone, et
R₈ est sélectionné dans le groupe consistant en H, un groupe alkyle présentant 1 à 10 atomes de carbone, et un groupe cycloalkyle présentant 3 à 8 atomes de carbone.

2. Électrolyte non aqueux selon la revendication 1, dans lequel le composé de Formule 1 est un quelconque sélectionné parmi les Formules 1-1 à 1-4.

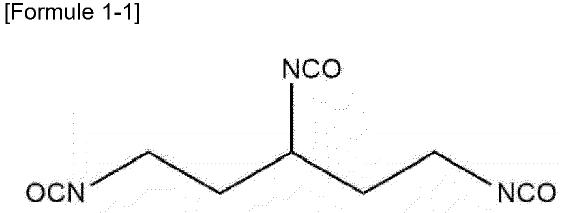

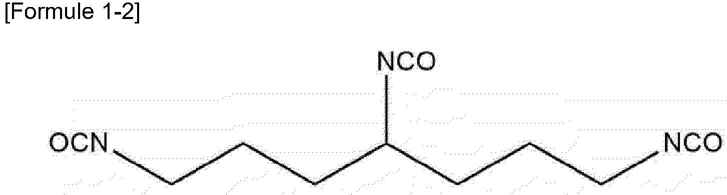

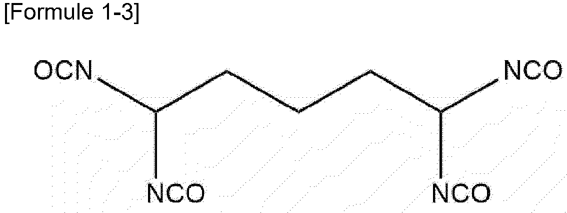

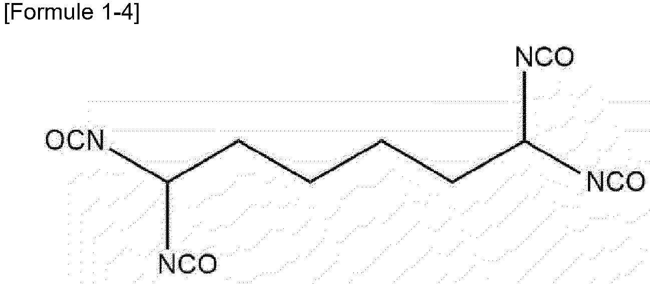

3. Électrolyte non aqueux selon la revendication 1, dans lequel le composé de Formule 2 est un composé de Formule 2-1.

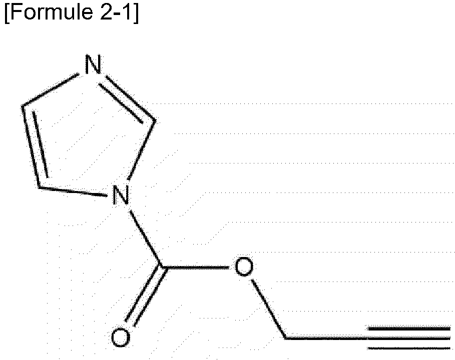

4. Électrolyte non aqueux selon la revendication 1, dans lequel le composé de Formule 3 est un composé de Formule 3-1. 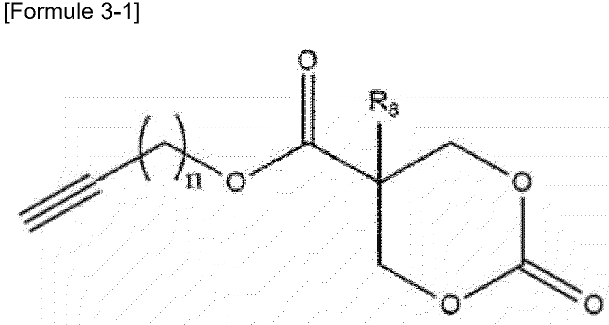 dans lequel, dans la Formule 3-1,
n est un entier naturel de 1 à 8, et
R₈ est H ou un groupe alkyle présentant 1 à 10 atomes de carbone.

5. Électrolyte non aqueux selon la revendication 1, dans lequel le composé de Formule 3 est un composé de Formule 3-2.

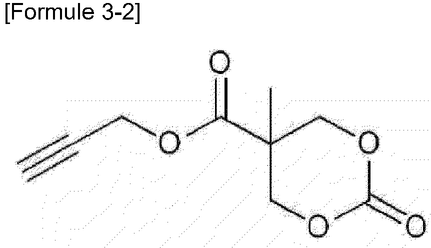

6. Électrolyte non aqueux selon la revendication 1, dans lequel le premier additif est inclus en une quantité de 0,01 partie en poids à 5 parties en poids sur la base de 100 parties en poids de l'électrolyte non aqueux.

7. Électrolyte non aqueux selon la revendication 1, dans lequel le deuxième additif est inclus en une quantité de 0,01 partie en poids à 5 parties en poids sur la base de 100 parties en poids de l'électrolyte non aqueux.

8. Électrolyte non aqueux selon la revendication 1, dans lequel le premier additif et le deuxième additif sont inclus dans un rapport pondéral de 1:0,002 à 1:500.

9. Électrolyte non aqueux selon la revendication 1, dans lequel le sel de lithium est au moins un sélectionné dans le groupe consistant en LiCl, LiBr, Lil, LiBF₄, LiClO₄, LiB₁₀Cl₁₀, LiAlCl₄, LiAlO₂, LiPF₆, LiSO₃CF₃, LiCO₂CH₃, LiCO₂CF₃, LiAsF₆, LiSbF₆, LiSO₃CH₃, LiN(SO₂F)₂, LiN (SO₂CF₂CF₃) ₂, et LiN (SO₂CF₃)₂.

10. Électrolyte non aqueux selon la revendication 1, dans lequel le sel de lithium est inclus à une concentration de 0,5 M à 5,0 M.

11. Électrolyte non aqueux selon la revendication 1, dans lequel le solvant organique comprend au moins un solvant organique sélectionné dans le groupe consistant en un solvant organique à base de carbonate cyclique, un solvant organique à base de carbonate linéaire, un solvant organique à base d'ester linéaire et un solvant organique à base d'ester cyclique.

12. Accumulateur au lithium comprenant :
une électrode positive ;
une électrode négative ; et
l'électrolyte non aqueux selon l'une quelconque des revendications 1 à 11.

13. Accumulateur au lithium selon la revendication 12, dans lequel l'électrode positive comprend un oxyde à base de nickel-lithium présentant une quantité de nickel parmi les métaux de transition à l'exclusion du lithium de 80 atm% ou plus en tant que matériau actif d'électrode positive.

14. Accumulateur au lithium selon la revendication 13, dans lequel l'oxyde à base de nickel-lithium est représenté par [Formule 4].
[Formule 4] LiₐNi_{b}CO_{c}M¹_{d}M²ₑO₂
dans lequel, dans la Formule 4, M¹ est le manganèse (Mn), l'aluminium (Al), ou une combinaison de ceux-ci, M² est au moins un sélectionné dans le groupe consistant en le zirconium (Zr), le tungstène (W), l'yttrium (Y), le baryum (Ba), le calcium (Ca), le titane (Ti), le magnésium (Mg), le tantale (Ta) et le niobium (Nb), et 0,8 ≤ a ≤ 1,2, 0,8 ≤ b < 1, 0 < c < 0,2, 0 < d < 0,2, et 0 ≤ e ≤ 0,1.

15. Accumulateur au lithium selon la revendication 12, dans lequel l'électrode négative comprend au moins un sélectionné dans le groupe consistant en le silicium (Si) et SiOₓ (0 < x ≤ 2) en tant que matériau actif d'électrode négative.
